(19) Europäisches Patentamt
European Patent Office
Office européen des brevets

(11) **EP 2 535 378 A1**

(12) **EUROPEAN PATENT APPLICATION**
published in accordance with Art. 153(4) EPC

(43) Date of publication:
**19.12.2012 Bulletin 2012/51**

(21) Application number: **11742287.3**

(22) Date of filing: **10.02.2011**

(51) Int Cl.:
*C08L 97/00* (2006.01) *C08G 59/40* (2006.01)

(86) International application number:
**PCT/JP2011/052833**

(87) International publication number:
**WO 2011/099544 (18.08.2011 Gazette 2011/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2010 JP 2010027547**

(71) Applicant: **Hitachi Chemical Company, Ltd.**
**Tokyo 163-0449 (JP)**

(72) Inventors:
• **KOBUNE, Mika**
**Tsukuba-shi**
**Ibaraki 300-4247 (JP)**
• **KOYAMA, Naoyuki**
**Tsukuba-shi**
**Ibaraki 300-4247 (JP)**
• **GOTOU, Akihito**
**Tsukuba-shi**
**Ibaraki 300-4247 (JP)**
• **KIKUCHI, Ikuko**
**Tsukuba-shi**
**Ibaraki 300-4247 (JP)**
• **SUKEGAWA, Tomofumi**
**Tsukuba-shi**
**Ibaraki 300-4247 (JP)**

(74) Representative: **HOFFMANN EITLE**
**Patent- und Rechtsanwälte**
**Arabellastrasse 4**
**81925 München (DE)**

(54) **RESIN COMPOSITION, MOLDED BODY AND COMPOSITE MOLDED BODY**

(57) In accordance with the present invention, by using a resin composition including lignin and a curing agent in which the lignin is soluble in an organic solvent and contained in the resin composition in an amount of from 10 to 90% by mass, there are provided a molded product and a composite molded product which are obtained from plant resources as a main raw material and to which a good flame retardance and a good antibacterial property are imparted.

EP 2 535 378 A1

**Description**

TECHNICAL FIELD

The present invention relates to a resin composition, and a molded product and a composite molded products which contain the resin composition.

BACKGROUND ART

Hitherto, chemical products have been produced from fossil resources such as petroleum and coals. In recent years, with the spread of a so-called carbon neutral concept, there is an increasing demand for biomass plastics. There is a recent active tendency that plastic materials used for packing materials, parts of domestic appliances, automobile parts, etc., are replaced with plant-derived resins (bioplastics).

Specific examples of the above plant-derived resins include polylactic acids (PLA) which are produced by chemically polymerizing a lactic acid as a monomer obtained by fermentation of sugars such as potatoes, sugar canes and corns; esterified starches produced from starches as a main component; microbial-produced resins (PHA: polyhydroxy alkanoate) as polyesters produced in vivo by microorganisms; and PTT (polytrimethylene terephthalate) produced from raw materials such as 1,3-propanediol obtained by a fermentation method and a petroleum-derived terephthalic acid. In addition, PBS (polybutylene succinate) has been presently produced from petroleum-derived raw materials. However, the production of PBS from plant-derived raw materials has now been studied and developed. In particular, the technology for producing succinic acid as one of main raw materials of PBS from plants has now been developed.

These resins obtained from the plant-derived raw materials have been used in various extensive applications such as electric/electronic parts, OA-relating parts and automobile parts as well as sanitary products such as toilet bowls, kitchen wares and bathroom wares, haberdasheries and building materials. In particular, in the applications such as electric/electronic parts OA-relating parts and automobile parts, the resins are required to have a flame retardance from the viewpoint of a high safety.

Also, in recent years, it has been pointed out that products used in the above application fields suffer from propagation of bacteria or mildew which gives an adverse influence on a human body or health, so that there is a demand for resins having an antibacterial property.

Conventionally, there have been made various attempts to impart a flame retardance and an antibacterial property to resins obtained from plant-derived raw materials, in particular, polylactic acid resins. However, petroleum-based resins must be used to improve properties of the plant-derived resins. As a result, when a content of the petroleum-based resins used therein increases, there tends to occur such a problem that the effects of lowering an amount of fossil resources used and an amount of carbon dioxide discharged which are needed to reduce environmental burdens are not attained.

As flame retardants, there are conventionally known bromine-based halogen flame retardants, phosphorus-based flame retardants, nitrogen compound-based flame retardants, silicone-based flame retardants and inorganic flame retardants (refer to Patent Documents 1 and 2). It is required that the above-mentioned flame retardants among various conventionally known flame retardants are added to resins in an amount as large as from 10 to 30 parts by mass and further up to about 50 parts by mass on the basis of 100 parts by mass of the resins in order to allow the flame retardants to effectively exhibit their functions.

These flame retardants are synthesized by using fossil resources as a raw material. Therefore, even though the plant-derived resins are used as a main raw material, the effect of reducing environmental burdens tends to be reduced.

In addition, the flame retardants themselves must be examined with respect to harmfulness or toxicity thereof. For example, the bromine-based flame retardants tend to generate dioxins owing to thermal decomposition thereof when incinerated. Also, the phosphorus-based flame retardants tend to have a fear of causing anaphylaxis (allergy) to chemical substances on a human body. In consequence, there will subsequently occur an increasing demand for flame retardants which are harmless and safe to a human body and can exhibit a practically sufficient flame retarding effect even when used in a small amount.

In order to impart an antibacterial property to resin compositions or molded products, there is known the method in which an antibacterial agent is kneaded in thermoplastic resins or thermosetting resins, or applied onto a surface of the molded products (refer to Patent Document 3). At present, an inorganic antibacterial agent has been mainly used as the antibacterial agent to be kneaded in the resins, whereas an organic antibacterial agent has been mainly used in the form of a liquid as the antibacterial agent to be applied on a surface of the molded products. Typical examples of the inorganic antibacterial agent include zeolites substituted with metals such as silver, and synthetic minerals. Typical examples of the organic antibacterial agent include chlorhexidine and quaternary ammonium salts.

On the other hand, studies on natural antibacterial agents have also been commenced. As the natural organic antibacterial agents, there are known various substances such as hinokitiol, Wasaouro (effective ingredient: allyl isothiocyanate), wasabi (Japanese horseradish) and ginger. These natural organic antibacterial agents have advantages owing to natural substances, but tend to suffer from various problems to be solved, such as incapability to generally withstand a high temperature upon processing the resins, less availability owing to a limited supply, necessity of adding other additives thereto for improving a compatibility with resins, etc.

Lignin can be obtained from plants. In this country, lignin is more readily available, for example, in the form of a lignosulfonate obtained from residues in a paper-making process. However, the lignosulfonates are water-soluble and hardly dissolved in an organic solvent. For this reason, it is difficult to obtain a uniform cured product of the lignosulfonates owing to a poor compatibility with a curing agent or a curing accelerator. In addition, the lignosulfonates may contain sulfur. In the application fields of electronic materials, it is known that sulfur contained in resin compositions exerts an adverse influence on stability of products obtained therefrom. In consequence, when using lignins containing a large amount of sulfur as a raw material, the resulting products tend to be used only in the limited applications.

PRIOR DOCUMENTS

PATENT DOCUMENTS

Patent Document 1: Japanese Patent Application Laid-Open No. 2007-002120
Patent Document 2: Japanese Patent No. 4423947
Patent Document 3: Japanese Patent Application Laid-Open No. 2009-286933

SUMMARY OF THE INVENTION

PROBLEM TO BE SOLVED BY THE INVENTION

Accordingly, an object of the present invention is to provide a plant-derived resin composition from the viewpoint of reducing environmental burdens, in particular, a resin composition obtained from plant-derived lignin as a main raw material which is imparted with a good flame retardance and a good antibacterial property, as well as a molded product and a composite molded product obtained from the resin composition.

MEANS FOR SOLVING THE PROBLEM

Thus, the present invention relates to the following aspects.

(1) A resin composition including lignin and a curing agent, the lignin being soluble in an organic solvent and contained in the resin composition in an amount of from 10 to 90% by mass.
(2) A resin composition including lignin and a curing agent, the lignin being soluble in an organic solvent and contained in the resin composition in an amount of from 30 to 90% by mass.
(3) The resin composition as described in the above aspect (1) or (2), wherein the lignin has a weight-average molecular weight of from 100 to 10000.
(4) The resin composition as described in the above aspect (1) or (2), wherein the lignin has a weight-average molecular weight of from 500 to 10000.
(5) The resin composition as described in any one of the above aspects (1) to (4), wherein a content of a sulfur atom in the lignin is 2% by mass or less.
(6) The resin composition as described in any one of the above aspects (1) to (5), wherein the lignin is obtained by treating a raw material with water only to thereby separate the lignin from a cellulose component and a hemicellulose component, and then dissolving the thus separated lignin in an organic solvent.
(7) The resin composition as described in any one of the above aspects (1) to (6), wherein the lignin is obtained by treating a plant raw material by a steam explosion method in which steam is introduced under pressure into the plant raw material and then a pressure applied by the steam introduced is instantaneously released for subjecting the plant raw material to steam explosion to thereby separate the lignin from a cellulose component and a hemicellulose component, and then dissolving the thus separated lignin in an organic solvent.
(8) The resin composition as described in any one of the above aspects (1) to (7), wherein the curing agent is an epoxy resin.
(9) The resin composition as described in any one of the above aspects (1) to (7), wherein the curing agent is an isocyanate.
(10) The resin composition as described in any one of the above aspects (1) to (7), wherein the curing agent is an aldehyde or a compound capable of producing formaldehyde.

(11) The resin composition as described in any one of the above aspects (1) to (7), wherein the curing agent is at least one compound selected from the group consisting of polycarboxylic acids and polycarboxylic acid anhydrides.

(12) The resin composition as described in any one of the above aspects (1) to (7), wherein the curing agent is at least one compound selected from the group consisting of unsaturated group-containing polycarboxylic acids and unsaturated group-containing polycarboxylic acid anhydrides.

(13) A molded product formed by molding the resin composition as described in any one of the above aspects (1) to (12).

(14) A composite molded product including lignin and a thermosetting resin, the lignin being soluble in an organic solvent and contained in the composite molded product in an amount of from 3 to 90% by mass.

(15) A composite molded product including lignin and a thermosetting resin, the lignin being soluble in an organic solvent and contained in the composite molded product in an amount of from 3 to 60% by mass.

(16) A composite molded product including lignin and a thermoplastic resin, the lignin being soluble in an organic solvent and contained in the composite molded product in an amount of from 3 to 90% by mass.

(17) A composite molded product including lignin and a thermoplastic resin, the lignin being soluble in an organic solvent and contained in the composite molded product in an amount of from 3 to 60% by mass.

(18) The composite molded product as described in any one of the above aspects (14) to (17), wherein the lignin has a weight-average molecular weight of from 100 to 10000.

(19) The composite molded product as described in any one of the above aspects (14) to (17), wherein the lignin has a weight-average molecular weight of from 500 to 10000.

(20) The composite molded product as described in any one of the above aspects (14) to (19), wherein a content of a sulfur atom in the lignin is 2% by mass or less.

(21) The composite molded product as described in any one of the above aspects (14) to (20), wherein the lignin is obtained by treating a raw material with water only to thereby separate the lignin from a cellulose component and a hemicellulose component, and then dissolving the thus separated lignin in an organic solvent.

(22) The composite molded product as described in any one of the above aspects (14) to (21), wherein the lignin is obtained by treating a plant raw material by a steam explosion method in which steam is introduced under pressure into the plant raw material and a pressure applied by the steam introduced is instantaneously released for subjecting the plant raw material to steam explosion to thereby separate the lignin from a cellulose component and a hemicellulose component, and then dissolving the thus separated lignin in an organic solvent.

EFFECT OF THE INVENTION

In accordance with the present invention, there can be attained the effects of reducing both an amount of fossil resources used and an amount of carbon dioxide discharged, and there can be provided a resin composition suitable for reducing environmental burdens as well as a plant-derived resin composition having excellent moldability and processability and a molded product produced from the resin composition. In addition, by using lignin as a main raw material, it is possible to provide a molded product having an excellent heat resistance and a high strength.

Also, in accordance with the present invention, by using lignin as a main raw material, it is possible to provide a plant-derived resin composition to which a good flame retarding effect is imparted in addition to the above effects.

Further, in accordance with the present invention, by using lignin as a main raw material, it is possible to provide a plant-derived resin composition to which a good antibacterial effect is imparted in addition to the above effects.

Furthermore, in accordance with the present invention, by using lignin as a main raw material, it is possible to provide a plant-derived resin composition to which a good flame retarding effect and a good antibacterial effect are imparted in addition to the above effects.

Still furthermore, in accordance with the present invention, by using lignin as a main raw material, it is possible to provide a resin composition to which the effect of reducing environmental burdens as well as a good heat resistance, a good flame retardance and a good antibacterial property are imparted, and further provide a molded product and a composite molded product which are obtained from the resin composition.

By using the organic solvent-soluble lignin as a main raw material, it is possible to improve a compatibility of the lignin with a curing agent and readily produce a molded product of the resin composition.

In addition, by using lignin having a sulfur atom content of 2% by mass or less as a main raw material, it is possible to provide a resin composition, a molded product and a composite molded products which have a less impurity content.

PREFERRED EMBODIMENTS FOR CARRYING OUT THE INVENTION

The present invention will be described in more detail below.

The present invention relates to a resin composition including lignin and a curing agent in which the lignin is soluble in an organic solvent and contained in the resin composition in an amount of from 10 to 90% by mass. When the content of the lignin in the resin composition is less than 10% by mass, it is not possible to achieve the effects owing to the lignin (i.e., reduction of environmental burdens, a good heat resistance, a good flame retardance, a good antibacterial property, etc.) to a sufficient extent. When the content of the lignin in the resin composition is more than 90% by mass, the resulting resin composition tends to be deteriorated in moldability. From these viewpoints, the content of the lignin in the resin composition is preferably from 30 to 90% by mass, more preferably from 30 to 80% by mass, still more preferably from 30 to 70% by mass and especially preferably from 40 to 50% by mass.

Meanwhile, as described hereinlater, the resin composition may further contain a curing accelerator, and the curing agent and the curing accelerator are preferably formed from lignin-based raw materials.

The weight-average molecular weight of the lignin is preferably from 100 to 10000 in terms of polystyrene, and more preferably from 100 to 5000 from the viewpoint of a good solubility in a solvent. The lignin having a weight-average molecular weight of 5000 or less can be well dissolved in various organic solvents, and the lignin having a weight-average molecular weight of less than 2000 is more excellent in solubility in a solvent. From the viewpoint of a good solubility in a solvent, the weight-average molecular weight of the lignin is especially preferably from 100 to 2000. On the other hand, from the viewpoint of obtaining a resin composition reflecting a merit of a structure of the lignin, the weight-average molecular weight of the lignin is preferably more than 500, more preferably more than 1000 and still more preferably more than 2000. Therefore, from the viewpoints of both a good solubility and a good moldability of the resin composition, the weight-average molecular weight of the lignin is preferably from 500 to 5000, more preferably from 1000 to 5000 and especially preferably from 2000 to 5000.

The lignin contains a polyphenol obtained from plants as a main component. The lignin has a basic skeleton structure having a hydroxyphenyl propane unit as a basic unit. Plants have an interpenetrating network (IPN) structure constituted from a hydrophilic linear polymeric polysaccharide structure (cellulose and hemicellulose) and a hydrophobic crosslinked lignin structure. The lignin occupies about 25% by mass of the plants, and has an irregular and extremely complicated polyphenol chemical structure. In the present invention, the merit of the complicated structure obtained from the plants is well reflected by using the lignin as a resin raw material, so that it becomes possible to provide a resin composition which can exhibit a good flame retardance and a good antibacterial property.

Meanwhile, in the present invention, the lignin as used herein means lignin which is separated from plants in a step of separating the lignin from cellulose and hemicellulose in the plants by subjecting the plants to physical pulverization or chemical decomposition. Further, the lignin may also contain lignin derivatives which are obtained by subjecting the lignin to acetylation, methylation, halogenation, nitration, sulfonation, phenolization and reactions with sodium sulfide or hydrogen sulfide owing to a solvent or a catalyst used in the separation step. In addition, the lignin may also contain a small amount of components other than the lignin such as cellulose and hemicellulose.

As the method of separating and extracting the lignin from plants, there may be used a kraft method, a sulfate method and an explosion method. Most of lignins being presently produced in a large amount are available in the form of residues produced upon production of cellulose as a raw material of papers or bio-ethanol. As the available lignins, there may be mentioned lignosulfonates by-produced mainly in the sulfate method. Examples of the other available lignins include alkali lignin, organosolv lignin, solvolysis lignin, hyphomycetes-treated wood materials, dioxane lignin, milled wood lignin and explosion lignin. The above lignins may be used as the lignin in the present invention irrespective of the separating or extracting method therefor. The plant raw material is not particularly limited as long as the lignin can be extracted therefrom. Examples of the plant raw material include Japanese cryptmeria, bamboo, rice straw, wheat straw, Japanese cypress, acacia, willow, poplar, bagasse, corn, sugar cane, rice hulls, eucalyptus and erianthus.

The hydroxyl equivalent of the lignin is not particularly limited to a specific range, but when the hydroxyl equivalent of the lignin is small (i.e., the amount of a hydroxyl group per a molecule of the lignin is large), the number of crosslinking points in the lignin is increased, so that the effect of increasing a crosslinking density of the resulting resin composition can be obtained. On the other hand, when the hydroxyl equivalent of the lignin is large (i.e., the amount of a hydroxyl group per a molecule of lignin is small), the number of crosslinking points in the lignin is decreased. As a result, in order to ensure the same crosslinking points, it is necessary to add a large amount of the lignin. At this time, since an amount of the lignin added is increased, the resulting resin composition can exhibit a large effect of reducing environmental burdens.

From the viewpoint of increasing a crosslinking density of the resulting resin composition, the hydroxyl equivalent of the lignin is preferably small. On the other hand, from the viewpoint of reducing environmental burdens upon using the resin composition and the molded product of the present invention, the hydroxyl equivalent of the lignin is preferably large. The hydroxyl equivalent of the lignin may be selected in view of a good balance between the above effects.

As described above, it is required that the amount of the lignin compounded in the resin composition varies depending upon the value of the hydroxyl equivalent of the lignin. However, the amount of the lignin added in the present invention is not limited to only one particular condition that the lignin and the curing agent are compounded to each other in equivalent amounts thereof. According to the present invention, depending upon not the hydroxyl equivalent of the lignin but the amount of the lignin added, the resin composition can be imparted with an effect of reducing environmental burdens, a good flame retardance and a good antibacterial property.

Among the above methods of obtaining the lignin, there is preferably used a method utilizing the separation technique using water, and there is more preferably used a steam explosion method. The steam explosion method means such a method in which plants are subjected to hydrolysis by a high-temperature and high-pressure steam, and then a pressure applied by the steam is instantaneously released to subject the plants to physical pulverization, whereby the plants can be pulverized for a short period of time. The steam explosion method is a clean separating method as compared to a sulfate method, a kraft method and the other separating methods, because only water is present in the steam explosion method without using sulfuric acid, sulfurous acid, etc. In the steam explosion method, the lignin containing no sulfur atom or the lignin having a less sulfur atom content can be obtained. The content of a sulfur atom in the lignin is usually 2% by mass or less, preferably 1% by mass or less, and more preferably 0.5% by mass or less. Further, the present inventors have found that by extracting the lignin from the explosion product with an organic solvent, it is possible to well control a molecular weight of the lignin.

In the present invention, as the organic solvent for extracting the lignin, there may be used an alcohol solvent containing one or more kinds of alcohols, a water-containing alcohol solvent prepared by mixing water with an alcohol, and a water-containing organic solvent prepared by mixing water with an organic solvent. As the water, ion-exchanged water is preferably used. The content of water in the mixed solvent containing water is preferably from 0 to 70% by mass. Since the lignin has a low solubility in water, it is difficult to extract the lignin by using water only as a solvent. In addition, by selectively using an appropriate solvent, it is possible to well control a weight-average molecular weight of the resulting lignin.

The resin composition of the present invention may contain an organic solvent. The resin composition of the present invention may be used in the form of a varnish. Examples of the organic solvent contained in the resin composition or the organic solvent used for extracting the lignin include alcohols, toluene, benzene, N-methyl pyrrolidone, methyl ethyl ketone, methyl isobutyl ketone, diethyl ether, methyl cellosolve (ethylene glycol monomethyl ether), cyclohexanone, dimethylformamide, methyl acetate, ethyl acetate, acetone and tetrahydrofuran. These organic solvents may be used alone or in the form of a mixture of any two or more thereof. The content of the organic solvent in the resin composition is not particularly limited. For example, the resin composition in the form of a varnish contains the organic solvent in an amount of from 10 to 80% by mass.

Examples of the alcohols include monools such as methanol, ethanol, n-propanol, isopropanol, n-butanol, tert-butanol, n-hexanol, benzyl alcohol and cyclohexanol, and polyols such as ethylene glycol, diethylene glycol, 1,4-butanediol, 1,6-hexanediol, trimethylol propane, glycerin and triethanol amine. Also, the alcohols obtained from natural substances are preferred from the viewpoint of reducing environmental burdens. Specific examples of the alcohols obtained from natural substances include natural substance-derived methanol, ethanol, n-propanol, isopropanol, n-butanol, tert-butanol, 1,3-propanediol, 1,3-butanediol, 1,4-butanediol, ethylene glycol, glycerin and hydroxymethyl furfural.

In the present invention, as the curing agent, there may be used an epoxy resin. Examples of the epoxy resin include bisphenol A glycidyl ether-type epoxy resins, bisphenol F glycidyl ether-type epoxy resins, bisphenol S glycidyl ether-type epoxy resins, bisphenol AD glycidyl ether-type epoxy resins, phenol novolak-type epoxy resins, biphenyl-type epoxy resins and cresol novolak-type epoxy resins. In addition, the epoxy resins obtained from natural substances are preferred from the viewpoint of reducing environmental burdens. Specific examples of the epoxy resins obtained from natural substances include epoxidized soybean oils, epoxidized fatty acid esters, epoxidized linseed oils and dimer acid-modified epoxy resins.

Also, as the curing agent, there are preferably used those products obtained by reacting an epoxy group of the above epoxy resins with a hydroxyl group contained in the lignin. When the curing agent contained in the resin composition is the lignin, the content of the lignin in the resin composition is preferably from 10 to 90% by mass. When the content of the lignin in the resin composition is 10% by mass or more, it is possible to achieve the effects owing to the lignin (i.e., such as reduction of environmental burdens, a good heat resistance, a good flame retardance and a good antibacterial property) to a sufficient extent. When the content of the lignin in the resin composition is 90% by mass or less, it is possible to prevent deterioration in moldability of the resulting resin composition. From these viewpoints, the content of the above curing agent in the resin composition is more preferably from 30 to 80% by mass and still more preferably from 30 to 60% by mass.

Also, in the present invention, as the curing agent, there may be used an isocyanate. Examples of the isocyanate include aliphatic isocyanates, alicyclic isocyanates and aromatic isocyanates, and modified products of these isocyanates. Specific examples of the aliphatic isocyanates include hexamethylene diisocyanate, lysine diisocyanate and lysine triisocyanate. Specific examples of the alicyclic isocyanates include isophorone diisocyanate. Specific examples of the aromatic isocyanates include tolylene diisocyanate, xylylene diisocyanate, diphenylmethane diisocyanate, polymeric diphenylmethane diisocyanate, triphenylmethane triisocyanate and tris(isocyanatophenyl) thiophosphate. Specific examples of the modified products of the isocyanates include a urethane prepolymer, a hexamethylene diisocyanate biuret, a hexamethylene diisocyanate trimer and an isophorone diisocyanate trimer.

In addition, as the curing agent, there are preferably used those products obtained by reacting an isocyanate group of the above isocyanates with a hydroxyl group contained in the lignin. When the curing agent contained in the resin composition is the isocyanate, the content of the isocyanate in the resin composition is preferably from 10 to 90% by mass. When the content of the isocyanate in the resin composition is 10% by mass or more, it is possible to achieve the effects owing to the lignin (i.e., such as reduction of environmental burdens, a good heat resistance, a good flame retardance and a good antibacterial property) to a sufficient extent. When the content of the isocyanate in the resin composition is 90% by mass or less, it is possible to prevent deterioration in moldability of the resulting resin composition. From these viewpoints, the content of the above curing agent in the resin composition is more preferably from 30 to 90% by mass and still more preferably from 60 to 90% by mass.

In the present invention, as the curing agent, there may be used an aldehyde or a compound capable of producing formaldehyde. The aldehyde is not particularly limited. Examples of the aldehyde include formaldehyde, paraformaldehyde, trioxane, acetaldehyde, propionaldehyde, chloral, furfural, glyoxal, n-butyraldehyde, capronaldehyde, allyl aldehyde, benzaldehyde, crotonaldehyde, acrolein, phenyl acetaldehyde, o-tolualdehyde and salicylaldehyde. Examples of the compound capable of producing formaldehyde include hexamethylenetetramine. Among them, preferred is hexamethylenetetramine. These aldehydes and compounds may be respectively used alone or in combination of any two or more thereof. In addition, among these aldehydes and compounds, from the viewpoints of a good curability and a good heat resistance, hexamethylenetetramine is preferred.

In addition, as the curing agent, there are preferably used those products obtained by reacting the above aldehyde or compound capable of producing formaldehyde with a phenol group contained in the lignin. When the curing agent contained in the resin composition is the aldehyde or compound capable of producing formaldehyde, the content of the aldehyde or compound capable of producing formaldehyde in the resin composition is preferably from 10 to 90% by mass. When the content of the aldehyde or compound capable of producing formaldehyde in the resin composition is 10% by mass or less, it is possible to achieve the effects owing to the lignin (i.e., such as reduction of environmental burdens, a good heat resistance, a good flame retardance and a good antibacterial property) to a sufficient extent. When the content of the aldehyde or compound capable of producing formaldehyde in the resin composition is 90% by mass or less, it is possible to prevent deterioration in moldability of the resulting resin composition. From these viewpoints, the content of the above curing agent in the resin composition is more preferably from 30 to 80% by mass and still more preferably from 30 to 60% by mass.

In the present invention, as the curing agent, there may also be used a polycarboxylic acid or a polycarboxylic acid anhydride. Specific examples of the polycarboxylic acid include aliphatic polycarboxylic acids such as malonic acid, succinic acid, glutaric acid, adipic acid, pimelic acid, suberic acid, azelaic acid and sebacic acid, and aromatic polycarboxylic acids such as trimellitic acid, pyromellitic acid, isophthalic acid, terephthalic acid, phthalic acid and 2,6-naphthalenedicarboxylic acid. Specific examples of the polycarboxylic acid anhydride include malonic anhydride, succinic anhydride, glutaric anhydride, adipic anhydride, pimelic anhydride, suberic anhydride, azelaic anhydride, ethyl nadic anhydride, alkenyl succinic anhydride and hexahydrophthalic anhydride, and aromatic polycarboxylic anhydrides such as trimellitic anhydride, pyromellitic anhydride, benzophenone tetracarboxylic acid anhydride and phthalic anhydride.

In addition, as the curing agent, there are preferably those products obtained by reacting the above polycarboxylic acid or polycarboxylic acid anhydride with a hydroxyl group contained in the lignin. The content of the polycarboxylic acid or polycarboxylic acid anhydride in the resin composition is preferably from 10 to 90% by mass. When the content of the polycarboxylic acid or polycarboxylic acid anhydride in the resin composition is 10% by mass or less, it is possible to achieve the effects owing to the lignin (i.e., such as reduction of environmental burdens, a good heat resistance, a good flame retardance and a good antibacterial property) to a sufficient extent. When the content of the polycarboxylic acid or polycarboxylic acid anhydride in the resin composition is 90% by mass or less, it is possible to prevent deterioration in moldability of the resulting resin composition. From these viewpoints, the content of the above curing agent in the resin composition is more preferably from 30 to 80% by mass and still more preferably from 30 to 60% by mass.

In the present invention, as the curing agent, there may also be used an unsaturated polycarboxylic acid or an unsaturated polycarboxylic acid anhydride. Specific examples of the unsaturated polycarboxylic acid include acrylic acid, crotonic acid, $\alpha$-ethyl acrylic acid, $\alpha$-n-propyl acrylic acid, $\alpha$-n-butyl acrylic acid, maleic acid, fumaric acid, citraconic acid, mesaconic acid and itaconic acid. Specific examples of the unsaturated polycarboxylic acid anhydride include maleic anhydride, itaconic anhydride, citraconic anhydride and cis-1,2,3,4-tetrahydrophthalic anhydride.

In addition, as the curing agent, there are preferably used those products obtained by reacting the above unsaturated polycarboxylic acid or unsaturated polycarboxylic acid anhydride with a hydroxyl group contained in the lignin. The content of the unsaturated polycarboxylic acid or unsaturated polycarboxylic acid anhydride in the resin composition is preferably from 10 to 90% by mass. When the content of the unsaturated polycarboxylic acid or unsaturated polycarboxylic acid anhydride in the resin composition is 10% by mass or less, it is possible to achieve the effects owing to the lignin (i.e., such as reduction of environmental burdens, a good heat resistance, a good flame retardance and a good antibacterial property) to a sufficient extent. When the content of the unsaturated polycarboxylic acid or unsaturated polycarboxylic acid anhydride in the resin composition is 90% by mass or less, it is possible to prevent deterioration in moldability of the resulting resin composition. From these viewpoints, the content of the above curing agent in the resin composition is more preferably from 30 to 80% by mass and still more preferably from 30 to 60% by mass.

The resin composition according to the present invention may also contain a curing accelerator. The content of the curing accelerator in the resin composition is preferably from 0.1 to 10% by mass. When the content of the curing accelerator in the resin composition is 10% by mass or less, the reaction can be readily controlled without occurrence of excessively accelerated reaction, so that the resulting resin composition can be readily molded. From these viewpoints, the content of the curing accelerator in the resin composition is more preferably from 0.1 to 5% by mass and still more preferably from 0.1 to 3% by mass.

Examples of the curing accelerator include cycloamidine compounds, quinone compounds, tertiary amine compounds, organic phosphines, metal salts, and imidazoles such as 1-cyanoethyl-2-phenyl imidazole, 2-methyl imidazole, 2-phenyl imidazole, 2-phenyl-4-methyl imidazole and 2-heptadecyl imidazole.

The molded product according to the present invention is produced from the above resin composition. Also, the resin composition is preferably in the form of particles, milled materials or fibrous materials having an average particle size of from 10 to 5000 $\mu$m. The "average particle size" as used in the present specification means a particle diameter at which a cumulative value calculated in a particle size distribution curve obtained by a laser diffraction scattering method is 50%.

The molded product of the present invention is usually produced (molded) by subjecting the above resin composition to compression, extrusion or injection using a resin molding machine such as an injection molding machine, a transfer molding machine and a compression molding machine. The production (moulding) conditions are not particularly limited.

Meanwhile, for example, using an injection molding machine, the molding resin-compounding material according to the present invention is injected and molded under the conditions including a nozzle temperature of from 80 to 200°C, an injection pressure of from 1 to 30 MPa, a mold clamping pressure of from 1 to 30 MPa, a metal mold temperature of from 50 to 300°C and a curing time of from 1 to 100 min, and the resulting molded product is further heat-treated at a temperature of from 50 to 300°C for 1 to 8 h and thereby fully cured. Also, for example, the molding resin-compounding material according to the present invention is filled into a metal mold of a compression molding machine heated to a temperature of from 80 to 250°C, and pressurized, cured and molded under a pressure of from 1 to 30 MPa for 1 to 100 min, and the resulting molded product is further heat-treated at a temperature of from 50 to 250°C for 1 to 8 h and thereby fully cured.

The composite molded product according to the present invention contains the above lignin, and a thermosetting resin or a thermoplastic resin.

The thermosetting resin used in the composite molded product according to the present invention may be optionally selected from thermosetting resins used as ordinary molding materials. Specific examples of the thermosetting resin include epoxy resins, phenol resins, unsaturated polyester resins, urea resins, melamine resins, polyurethanes, cyanate resins, bismaleimide resins, and bismaleimide/triazine resins (generally called "BT resins").

The thermoplastic resin used in the composite molded product according to the present invention may be optionally selected from thermoplastic resins used as ordinary molding materials. Specific examples of the thermoplastic resin include polyester resins, polyurethane resins, polycarbonate resins, polyamide resins, polyacetal resins, styrene-based resins, olefin-based resins, methacrylic resins, polyvinyl chloride-based resins, polyvinylidene chlorine resins, fluororesins and various thermoplastic elastomers. The thermoplastic resins are more preferably plant-derived thermoplastic resins. Specific examples of the plant-derived thermoplastic resins include polylactic acids (PLA), esterified starches, polyhydroxyalkanoic acids (PHA), polytrimethylene terephthalate (PTT), polybutylene terephthalate (PBT), and polyester resins synthesized from monomers such as succinic acid or itaconic acid and 1,3-propanediol or 1,4-butanediol. These plant-derived thermoplastic resins may be used alone or in combination of any two or more thereof.

The composite molded product according to the present invention is required to contain lignin in an amount of from 3 to 90% by mass. When the content of the lignin in the composite molded product is less than 3% by mass, it will be difficult to attain the effects owing to inclusion of the lignin therein. In order to attain sufficient effects of the lignin, the content of the lignin in the composite molded product is preferably 10% by mass or more, and more preferably 30% by mass or more. When the content of the lignin in the composite molded product is more than 90% by mass, the obtained composite molded product tends to be deteriorated in moldability. From the viewpoint of a good moldability, the content of the lignin in the composite molded product is preferably 90% by mass or less, and more preferably 80% by mass or less. For the above reasons, the content of the lignin in the composite molded product is from 3 to 90% by mass, preferably from 10 to 80% by mass, and more preferably from 30 to 80% by mass.

The composite molded product may contain a curing agent and may further contain a curing accelerator. Examples of the curing agent and the curing accelerator used in the composite molded product include the same curing agents and curing accelerators as used in the above resin composition. In addition, as the lignin contained in the composite molded product, there may also be used the above lignin-containing resin composition. That is, the composite molded product of the present invention may be constituted from the resin composition and the thermosetting resin or thermoplastic resin.

The composite molded product according to the present invention is imparted with the above effects (such as reduction of environmental burdens, a good heat resistance, a good flame retardance and a good antibacterial property) by adding the lignin as a filler to the thermosetting resin or thermoplastic resin. In this case, unlike the above-mentioned resin composition, the lignin contained in the composite molded product may be not necessarily reacted with the thermosetting resin or thermoplastic resin, but may be only compatibilized or dispersed in the thermosetting resin or thermoplastic resin.

The molded product and the composite molded product produced according to the present invention may be formed into an optional shape. For example, the molded product and the composite molded product may be used as various parts in extensive applications such as electric/electronic parts, OA-relating parts and automobile parts as well as sanitary products such as toilet bowls, kitchen wares and bathroom wares, haberdasheries and building materials.

The molded product and the composite molded product according to the present invention preferably have a flexural strength of 100 MPa or more, more preferably 150 MPa or more, and especially preferably 180 MPa or more. When the flexural strength of the molded product and the composite molded product is 100 MPa or less, the molded product and the composite molded product tend to suffer from cracking or breaking and therefore tend to be deteriorated in durability, depending upon parts and products to which these molded products are applicable. The molded product and the composite molded product do not necessarily have a high flexural strength. However, as the flexural strength of the molded product and the composite molded product becomes higher, these molded products can be used in a larger number of parts or products and in more extensive application fields. Therefore, it is preferred that the molded product and the composite molded product have a higher flexural strength. Meanwhile, the method of measuring the flexural strength is described hereinlater.

The glass transition temperature of the molded product and the composite molded product according to the present invention may vary depending upon use conditions of parts and products to which the molded product and the composite molded product are applicable, and is preferably 100°C or higher, more preferably 150°C or higher, and especially preferably 200°C or higher. As the glass transition temperature of the molded product and the composite molded product becomes higher, these molded products have a higher heat resistance and can be used in a larger number of parts or products and in more extensive application fields. Therefore, it is preferred that the molded product and the composite molded product of the present invention have a higher glass transition temperature. Meanwhile, the method of measuring the glass transition temperature is described hereinlater.

In the resin composition, the molded product and the composite molded products according to the present invention, various additive components may be compounded therein, if required, upon polymerization of the polymer components or upon molding and processing the polymer molded products. Examples of the additive components include plasticizers (such as mineral oils and silicone oils), lubricants, stabilizers, antioxidants, ultraviolet absorbers, releasing agents, mildew-proof agents, reinforcing fiber agents (such as glass fibers, carbon fibers and aramid fibers), inorganic fillers and organic fillers. These additive components may be used in combination with the other known flame retardants or antibacterial agents. In addition, from the viewpoint of reducing environmental burdens, various powders such as a paper powder, a wood powder, a cellulose powder, a chaff powder, a fruit shell powder, a chitin powder, a chitosan powder, a protein powder and a starch powder may be added to the resin composition, the molded product and the composite molded products according to the present invention.

EXAMPLES

The present invention is described in more detail by referring to the following examples, etc. However, it should be noted that these examples are only illustrative and not intended to limit the invention thereto.

[PRODUCTION EXAMPLE 1]

(Extraction of Lignin)

Bamboo was used as a raw material for extraction of lignin. Bamboo pieces cut into an appropriate size were charged into a 2 L pressure container of a steam explosion apparatus, and a steam having a pressure of 3.5 MPa was introduced under pressure thereinto, followed by holding the pressurized inside condition of the container for 4 min. Thereafter, a valve of the container was rapidly opened to subject the contents of the container to steam explosion, thereby obtaining a steam explosion product. The resulting steam explosion product was washed with water until a pH value of the washing liquid reached 6 or larger to thereby remove a water-soluble component therefrom. Then, a residual water in the resulting product was removed using a vacuum dryer. One thousand milliliters (1000 mL) of acetone were added to 100 g of the resulting dried product, and the obtained mixture was stirred for 3 h and then filtered to remove fibrous substances therefrom. Further, the extraction solvent (acetone) was removed from the resulting filtrate to thereby obtain lignin. The thus obtained lignin was in the form of a brown powder at an ordinary temperature (25°C).

[Measurement of Weight-Average Molecular Weight]

The molecular weight of the lignin was measured by a gel permeation chromatograph (GPC) equipped with a differential refractometer. More specifically, the measurement of a molecular weight of the lignin was conducted with columns "GEL-PAK GL-A120S" and "GEL-PAK GL-A140S" available from Hitachi High-Technologies Corp., connected in series with each other by using a narrow polydispersity polystyrene as a reference standard substance and tetrahydrofuran as a moving phase. As a result, it was confirmed that the weight-average molecular weight of the lignin was 2900.

[Measurement of Content of Sulfur Atom]

The content of a sulfur atom in the above lignin was quantitatively determined by a combustion/decomposition ion chromatographic method using an automatic sample combustion apparatus "AQF-100" available from Mitsubishi Chemical Analytech Co., Ltd., and an ion chromatograph "ICS-1600" available from Nippon Dionex Co., Ltd. As a result, it was confirmed that the content of a sulfur atom in the lignin was 0.034% by mass.

(Solvent Solubility)

The solvent solubility was evaluated by adding 1 g of the above organic solvent-soluble lignin in 10 mL of an organic solvent according to the following ratings.

○: Readily dissolved at an ordinary temperature (25°C);
Δ: Dissolved at a temperature of from 50 to 70°C; and
✕ : Undissolved even when heated.

In the above evaluation, a solvent group 1 including acetone, cyclohexanone and tetrahydrofuran, and a solvent group 2 including methanol, ethanol and methyl ethyl ketone were used for evaluating the solvent solubility. As a result, it was confirmed that all of the solvents in the solvent group 1 exhibited the evaluation rating of ○, whereas all of the solvents in the solvent group 2 exhibited the evaluation rating of Δ.

[Measurement of Hydroxyl equivalent]

The hydroxyl equivalent of the above obtained lignin was determined from a hydroxyl value measured by an acetic anhydride-pyridine method and an acid value measured by a potentiometric titration method (a unit of the below-mentioned hydroxyl equivalent is a "gram/equivalent" which is hereinafter simply expressed by "g/eq."). As a result, it was confirmed that the hydroxyl equivalent of the lignin was 130 g/eq.

(Measurement of Molar Ratio between Phenolic Hydroxyl Group and Alcoholic Hydroxyl Group)

The molar ratio of a phenolic hydroxyl group to an alcoholic hydroxyl group in the lignin (hereinafter referred to merely as a "P/A ratio") was determined by the following method. That is, 2 g of the lignin was subjected to acetylation treatment, and an unreacted acetylating agent was removed by distillation from the reaction product. The resulting acetylation reaction product was dried and then dissolved in heavy chloroform, and the resulting solution was subjected to $^1$H-NMR ("V400M" available from Bruker Inc.; proton fundamental frequency: 400.13 MHz). The above molar ratio was determined from an integral ratio of acetyl group-derived proton in the lignin (proton derived from an acetyl group bonded to a phenolic hydroxyl group: 2.2 to 3.0 ppm; proton derived from an acetyl group bonded to an alcoholic hydroxyl group: 1.5 to 2.2 ppm). As a result, it was confirmed that the P/A ratio of the lignin was 1.5.

[PRODUCTION EXAMPLE 2]

Lignin was extracted by using Japanese cryptmeria as a raw material for extraction of the lignin. That is, the raw material was treated by the same method as in Production Example 1 except that a steam having a pressure of 3.8 MPa was introduced under pressure to subject the raw material to steam explosion for 2 min, thereby obtaining the lignin. The hydroxyl equivalent, the molar ratio between a phenolic hydroxyl group and an alcoholic hydroxyl group, the solvent solubility, the weight-average molecular weight and the content of a sulfur atom of the lignin were respectively measured by the same methods as in Production Example 1. The results are shown in Table 1.

[COMPARATIVE PRODUCTION EXAMPLES 1 AND 2]

As comparative samples, there were used a high-purity partially desulfonated sodium lignosulfonate (product name "VANILEX N" available from Nippon Paper Chemicals, Co., Ltd.) and magnesium lignosulfonate (product name "SUN-EXTRACT P321" available from Nippon Paper Chemicals, Co., Ltd.) which were obtained from residues produced during a paper making process. The solvent solubility and the content of a sulfur atom of these comparative samples were measured by the same methods as in Production Example 1. The results are shown in Table 1.
Since the above comparative samples were insoluble in organic solvents, the weight-average molecular weight of the respective comparative samples was measured by a different method from that used in Production Example 1. That is, the molecular weight of the respective comparative samples was measured by a gel permeation chromatograph (GPC) equipped with a differential refractometer. More specifically, the measurement of a molecular weight of the respective comparative samples was conducted with a column "GEL-PAK GL-W550" available from Hitachi High-Technologies Corp., by using a polyethylene glycol as a reference standard substance and a mixed solution of sodium carbonate, sodium hydrogencarbonate and acetonitrile as a moving phase. Further, the hydroxyl equivalent and the molar ratio between a phenolic hydroxyl group and an alcoholic hydroxyl group of the respective comparative samples were not measurable because they were insoluble in solvents.
TABLE 1

| | Raw material (product name) | Mw | Mw /Mn | Sulfur content (mass% ) | Solubility | | | Compatibility with epoxy resin | Hydroxyl equivalent (g/eq.) | P/A |
|---|---|---|---|---|---|---|---|---|---|---|
| | | | | | Solvent group 1 | Solvent group 2 | Water | | | |
| Production Example 1 | Bamboo | 2900 | 2.3 | 0.034 | ○ | Δ | × | ○ | 130 | 1.5 |
| Production Example 2 | Japanese cryptmeria | 1800 | 1.9 | 0.009 | ○ | Δ | × | ○ | 116 | 0.9 |
| Comparative Production Example 1 | VANILEX | 4800 | 13.0 | 2.5 | × | × | ○ | × | - | - |
| Comparative Production Example 2 | SUN-EXTRACT | 5200 | 9.4 | 5.8 | × | × | ○ | × | - | - |

Note: Mw: Weight-average molecular weight; Mn: Number-average molecular weight Solubility: Evaluated according to the following ratings.
○: Readily dissolved at an ordinary temperature;
Δ: Dissolved at a temperature of from 50 to 70°C; and
×: Undissolved.
Solvent group 1: Acetone, cyclohexanone and tetrahydrofuran
Solvent group 2: Methanol, ethanol and methyl ethyl ketone
P/A: Molar ratio between a phenolic hydroxyl group and an alcoholic hydroxyl group

The sulfur contents of the lignins obtained in Production Examples 1 and 2 were 0.034% by mass and 0.009% by mass, respectively. On the other hand, the sulfur contents of the comparative samples used in Comparative Production Examples 1 and 2 were 2.5% by mass and 5.8% by mass, respectively, namely, the respective comparative samples contained a large amount of sulfur.

The solvents for which the lignin exhibited a high solubility were acetone, cyclohexanone and tetrahydrofuran. The lignin was hardly dissolved in methanol, ethanol and methyl ethyl ketone at an ordinary temperature (25°C), but when heated to a temperature of from 50 to 70°C, the lignin was dissolved in these solvents. In addition, the lignin was undissolved in water. On the other hand, the lignosulfonates as used as the comparative samples in Comparative Production Examples 1 and 2 were well dissolved in water, but hardly dissolved in the organic solvents shown in Table 1 and further exhibited a poor compatibility with the epoxy resins.

In the following Examples, the lignin obtained in Production Example 1 was used.

[EXAMPLE 1]

(Production of Resin Composition)

One hundred grams of the lignin obtained in Production Example 1 were mixed with 72 g of a bisphenol F-type epoxy resin (product name "YDF-8170C" available from Tohto Kasei Co., Ltd.; epoxy equivalent: 156 g/eq.) as a curing agent and 1 g of 1-cyanoethyl-2-phenyl imidazole (product name "CUREZOLE 2PZ-CN" available from Shikoku Chemicals Corp.) as a curing accelerator, and the resulting mixture was kneaded by heating rolls at 150°C for 5 min. The obtained kneaded material was pulverized using a pulverizer, and passed through a sieve having a opening of 1 mm, thereby obtaining a resin composition in the form of particles (pulverized product) having an average particle size of 0.6 mm. The average particle size of the resin composition was measured using a laser diffraction scattering particle size distribution measuring apparatus "LS13 320" available from Beckman Coulter Inc.

(Production of Molded Product)

The above obtained resin composition was filled into a metal mold of a compression molding machine heated to 180°C, pressed under a pressure of 4 MPa for 10 min and then cured. The resulting cured product was further subjected to curing treatment at 200°C for 4 h and fully cured, thereby obtaining a molded product containing lignin in an amount of 55% by mass.

[Three-Point Bending Test]

A housing for electronic equipment produced as a molded product was subjected to three-point bending test using a Microforce Precision Tester available from Instron Tool Works Inc., to measure and evaluate a flexural strength and a flexural modulus thereof. The above test was conducted using a test piece having a size of 50 x 5 x 1 mm at a distance between supports of 30 mm and at a testing speed of 1 mm/min. As a result, it was confirmed that the test piece had a flexural strength of 202 MPa and a flexural modulus of 4.7 GPa.

[Measurement of Glass Transition Temperature]

A storage modulus and a loss tangent of the molded product were measured (under the conditions: sample size: 40 mm in length x 5 mm in width x 1 mm in thickness; distance between chucks: 20 mm; 25°C to 350°C; temperature rise rate: 5°C/min; tension mode; synthesized wave (2 Hz, 1 Hz, 0.4 Hz, 0.2 Hz, 0.1 Hz)) using a viscoelasticity spectrometer "EXSTARDMS6100" available from SII Nano Technology Inc., according to JIS K7244. The glass transition temperature of the molded product was determined from a peak temperature of the loss tangent as measured at 1 Hz. As a result, it was confirmed that the molded product had a glass transition temperature of 135°C.

(Flame Retardance Test)

The flame retardance was evaluated according to UL flame retardance test standard (UL-94). The above housing for electronic equipment was cut into a test piece having a size of 3 mm in thickness x 130 mm in length x 13 mm in width. According to the above standard, a flame retardance of a flame retardant composition is classified into burning ratings of V-0, V-1, V-2 and HB in the order of from high flame retardance to low flame retardance. As a result, it was confirmed that the test piece had a burning speed of 40 mm/min or less when subjected to horizontal burning test, and exhibited a flame retardance corresponding to HB.

(Antibacterial Test)

The antibacterial property against Staphylococcus aureus was evaluated according to JIS Z2801. A fungus solution (viable cell count: 2.5 to 10 x $10^5$/mL) was spread in an amount of 0.4 mL on the test piece (molded product), and covered with a film to culture the fungus at a temperature of 35°C±1°C for 24 h. In order to measure the viable cell count on the test piece (molded product), the cultured material was sampled, and the obtained sample was appropriately diluted and cultured on an agar plate at a temperature of 35°C±1°C for 48 h to determine the viable cell count.

$$R = [Log(B/A) - log(C/A)] = [Log(B/C)]$$

wherein R: Antibacterial activity value; A: Average value (number) of the viable cell count immediately after inoculated on an untreated test piece; B: Average value (number) of the viable cell count after the elapse of 24 h on an untreated test piece; and C: Average value (number) of the viable cell count after the elapse of 24 h on an antibacterial-treated test piece.

When the antibacterial activity value is 2 or more, the antibacterial property of the molded product is regarded as being good. The molded product produced from the resin composition exhibited an antibacterial activity value of 3.2 against Staphylococcus aureus, and therefore had a good antibacterial property.

[Plant Degree and Index of Effect of Reducing Environmental Burdens]

The plant degree of the resin composition and the molded products was expressed by a content (% by mass) of a biomass-derived material therein. Japan BioPlastics Association has established a "standard for identification and representation of biomass plastics" for distinguishing the biomass plastics from existing fossil resource-derived plastics, in which plastic products having a biomass plastics content (degree) of 25% by mass or larger on the basis of a total weight of the plastic products are accepted as a certified product. According to the above standard, in the present invention, the products having a plant degree of 25% by mass or more were regarded as being those having the effect of reducing environmental burdens.

[EXAMPLES 2 TO 5]

One hundred grams of the lignin obtained in Production Example 1 were mixed with a bisphenol A glycidyl ether-type epoxy resin, a cresol novolak-type epoxy resin, a polyfunctional bisphenol A glycidyl ether-type epoxy resin and a polyfunctional naphthalene skeleton-type epoxy resin which were used as a curing agent in amounts of 80 g, 96 g, 78 g and 77 g, respectively, and further with 1 g of 1-cyanoethyl-2-phenyl imidazole (product name "CUREZOLE 2PZ-CN" available from Shikoku Chemicals Corp.) as a curing accelerator similarly to Example 1, and the resulting mixture was kneaded and molded, thereby obtaining a molded product containing lignin in an amount of 51 to 58% by mass. The resulting molded product was subjected to flame retardance test, antibacterial test, three-point bending test and measurement of glass transition temperature by the same methods as in Example 1. The results are shown in Table 2.

[COMPARATIVE EXAMPLE 1]

One hundred grams of a bisphenol F-type epoxy resin were mixed with 2 g of 1-cyanoethyl-2-phenyl imidazole as a curing accelerator, and the resulting mixture was filled in a metal mold heated to 180°C, and then cured for 10 min. The cured product was further subjected to curing treatment at 200°C for 4 h and fully cured, thereby obtaining a molded product containing no lignin. The resulting molded product was subjected to flame retardance test, antibacterial test, three-point bending test and measurement of glass transition temperature by the same methods as in Example 1. The results are shown in Table 2.

[COMPARATIVE EXAMPLES 2]

One hundred grams of a phenol novolak resin (product name "HP-850N" available from Hitachi Chemical Co., Ltd.; hydroxyl equivalent: 106 g/eq.) were mixed with 147 g of a bisphenol F glycidyl ether-type epoxy resin and 1 g of 1-cyanoethyl-2-phenyl imidazole, and the resulting mixture was kneaded and molded in the same manner as in Example 1, thereby obtaining a molded product containing no lignin. The resulting molded product was subjected to three-point bending test and measurement of glass transition temperature by the same methods as in Example 1. The results are shown in Table 2.

[COMPARATIVE EXAMPLE 3]

One hundred grams of the sodium lignosulfonate used in Comparative Production Example 1 were mixed with 72 g of a bisphenol F-type epoxy resin and 1 g of 1-cyanoethyl-2-phenyl imidazole, and the resulting mixture was kneaded in the same manner as in Example 1. As a result, there occurred a phase separation between the lignosulfonate and the epoxy resin, and it was not possible to obtain a uniform molded product.

[COMPARATIVE EXAMPLE 4]

One hundred grams of the magnesium lignosulfonate used in Comparative Production Example 2 were mixed with 72 g of a bisphenol F-type epoxy resin and 1 g of 1-cyanoethyl-2-phenyl imidazole, and the resulting mixture was kneaded in the same manner as in Example 1. As a result, there occurred a phase separation between the lignosulfonate and the epoxy resin, and it was not possible to obtain a uniform molded product.
TABLE 2

| | Raw material | | Amount compounded (mass%) | | | Properties | | | | Evaluation | | |
|---|---|---|---|---|---|---|---|---|---|---|---|---|
| | Phenol resin | Epoxy resin | Phenol resin | Epoxy resin | Curing accelerator | Flexural strength (MPa) | Flexural modulus (GPa) | Tg (°C) | Plant degree (mass%) | Flame retardance | Antibacterial property | Effect of reducing environmental burdens |
| Ex. 1 | Lignin (Pro. Ex. 1) | YDF-8170C | 58 | 41 | 1 | 202 | 4.7 | 135 | 55 | HB | Attained | Attained |
| Ex. 2 | | YD-8125 | 55 | 44 | 1 | 206 | 4.0 | 160 | 58 | HB | Attained | Attained |
| Ex. 3 | | YDCN-700-10 | 51 | 48 | 1 | 194 | 3.8 | 198 | 51 | HB | Attained | Attained |
| Ex. 4 | | 1032H60 | 56 | 43 | 1 | 174 | 3.9 | 225 | 56 | HB | Attained | Attained |
| Ex. 5 | | EXA-4710 | 56 | 43 | 1 | 147 | 3.8 | 233 | 56 | HB | Attained | Attained |
| Com. Ex. 1 | - | YDF-8170C | 0 | 98 | 2 | 162 | 3.6 | 82 | 0 | None | None | None |
| Com. Ex.2 | Phenol/ novolak resin | YDF-8170C | 40 | 59 | 1 | 150 | 3.2 | 128 | 0 | - | - | None |

Note:YDF-8170C: Bisphenol F glycidyl ether-type epoxy resin; available from Tohto Kasei Co., Ltd.; epoxy equivalent: 156 g/eq.
YD-8125: Bisphenol A glycidyl ether-type epoxy resin; available from Tohto Kasei Co., Ltd.; epoxy equivalent: 173 g/eq.
YDCN-700-10: Cresol novolak-type epoxy resin; available from Nippon Steel Chemical Co., Ltd.; epoxy equivalent: 209 g/eq.
1032H60: Polyfunctional bisphenol A glycidyl ether-type epoxy resin; available from Mitsubishi Chemical Corp.; epoxy equivalent: 170 g/eq.
EXA-4710: Polyfunctional naphthalene skeleton-type epoxy resin; available from DIC Corp.; epoxy equivalent: 167 g/eq.

[EXAMPLE 6]

One hundred grams of the lignin obtained in Production Example 1 were mixed with 77 g of a bisphenol F glycidyl ether-type epoxy resin (YDF-8170C) and 1 g of "CUREZOLE 2PZ-CN" as curing agents, and further with aluminum hydroxide as a flame retardant assistant in an amount of 85 g on the basis of a total weight of the resin, and the resulting mixture was molded in the same manner as in Example 1, thereby obtaining a molded product containing lignin in an amount of 38% by mass. As a result of subjecting the resulting molded product to flame retardance test by the same method as in Example 1, it was confirmed that the molded product had a flame retardance corresponding to V-1.

[EXAMPLE 7]

One hundred grams of the lignin obtained in Production Example 1 were mixed with 77 g of a bisphenol F glycidyl ether-type epoxy resin (YDF-8170C) and 1 g of "CUREZOLE 2PZ-CN" as curing agents, and further with aluminum hydroxide as a flame retardant assistant in an amount of 113 g on the basis of a total weight of the resin, and the resulting mixture was molded in the same manner as in Example 1, thereby obtaining a molded product containing lignin in an amount of 34% by mass. As a result of subjecting the resulting molded product to flame retardance test in the same method as in Example 1, it was confirmed that the molded product had a flame retardance corresponding to V-0.

[EXAMPLE 8]

A 100 mL four-necked separable flask equipped with an agitation blade was charged with 100 g of the lignin obtained in Production Example 1, 100 g of methyl ethyl ketone (available from Wako Pure Chemical Industries, Ltd.) and 30 g of an acrylic rubber (product name "HTR-860" available from Nagase Chemtex Corp.), and the contents of the flask were stirred. Then, 1.5 g of dibutyl tin (IV) dilaurate (available from Wako Pure Chemical Industries, Ltd.) as a curing accelerator were added to the flask, and after fully stirring the contents of the flask, 18 g of hexamethylene diisocyanate (available from Wako Pure Chemical Industries, Ltd.) as a curing agent were added thereto. The obtained mixture was subjected to degassing treatment under mixing, thereby obtaining a resin composition. The resulting resin composition was applied onto a PET film subjected to mold release treatment, and then treated and cured using a hot air dryer at 120°C for 2 h, at 180°C for 2 h and at 200°C for 2 h, thereby obtaining a molded product containing lignin in an amount of 67% by mass.

[EXAMPLE 9]

One hundred grams of the lignin obtained in Production Example 1 were mixed with 10 g of hexamethylenetetramine (product name "HEXAMINE SUPERFINE" available from CHANG CHUN Petrochemical Co., Ltd.) as a curing agent and 50 g of spherical silica (product name "S430" available from Micron Technology, Inc.) as a filler, and the resulting mixture was kneaded by heating rolls at 150°C for 5 min. The obtained kneaded material was pulverized using a pulverizer, and passed through a sieve having a opening of 5 mm, thereby obtaining a resin composition in the form of particles (pulverized product) having an average particle size of 3.5 mm.

The thus obtained resin composition was molded using an injection molding machine. The injection molding process was carried out under the conditions including a nozzle temperature of 130°C, an injection pressure of 13 MPa, a mold clamping pressure of 14 MPa, a metal mold temperature of 180°C and a curing time of 3 min. Further, the resulting molded product was treated at 200°C for 4 h and fully cured, thereby obtaining a molded product containing lignin in an amount of 63% by mass.

[EXAMPLES 10]

One hundred grams of the lignin (organic solvent-soluble lignin) obtained in Production Example 1 and 100 g of polylactic acid ("REVODE" available from Zhejiang Hisun Biomaterials Co., Ltd.) were kneaded at 180°C for 5 min using a kneader ("LABOPLASTO MILL, Model No. 4C150" available from Toyo Seiki Seisaku-Sho, Ltd.), and then molded using a press molding machine, thereby obtaining a molded product containing lignin in an amount of 50% by mass. As a result, it was confirmed that the thus obtained composite molded product had a plant degree of 100% by mass.

**Claims**

1. A resin composition comprising lignin and a curing agent, the lignin being soluble in an organic solvent and contained in the resin composition in an amount of from 10 to 90% by mass.

2. A resin composition comprising lignin and a curing agent, the lignin being soluble in an organic solvent and contained in the resin composition in an amount of from 30 to 90% by mass.

3. The resin composition according to claim 1 or 2, wherein the lignin has a weight-average molecular weight of from 100 to 10000.

4. The resin composition according to claim 1 or 2, wherein the lignin has a weight-average molecular weight of from 500 to 10000.

5. The resin composition according to any one of claims 1 to 4, wherein a content of a sulfur atom in the lignin is 2% by mass or less.

6. The resin composition according to any one of claims 1 to 5, wherein the lignin is obtained by treating a raw material with water only to thereby separate the lignin from a cellulose component and a hemicellulose component, and then dissolving the thus separated lignin in an organic solvent.

7. The resin composition according to any one of claims 1 to 6, wherein the lignin is obtained by treating a plant raw material by a steam explosion method in which steam is introduced under pressure into the plant raw material and then a pressure applied by the steam introduced is instantaneously released for subjecting the plant raw material to steam explosion to thereby separate the lignin from a cellulose component and a hemicellulose component, and then dissolving the thus separated lignin in an organic solvent.

8. The resin composition according to any one of claims 1 to 7, wherein the curing agent is an epoxy resin.

9. The resin composition according to any one of claims 1 to 7, wherein the curing agent is an isocyanate.

10. The resin composition according to any one of claims 1 to 7, wherein the curing agent is an aldehyde or a compound capable of producing formaldehyde.

11. The resin composition according to any one of claims 1 to 7, wherein the curing agent is at least one compound selected from the group consisting of polycarboxylic acids and polycarboxylic acid anhydrides.

12. The resin composition according to any one of claims 1 to 7, wherein the curing agent is at least one compound selected from the group consisting of unsaturated group-containing polycarboxylic acids and unsaturated group-containing polycarboxylic acid anhydrides.

13. A molded product formed by molding the resin composition as defined in any one of claims 1 to 12.

14. A composite molded product comprising lignin and a thermosetting resin, the lignin being soluble in an organic solvent and contained in the composite molded product in an amount of from 3 to 90% by mass.

15. A composite molded product comprising lignin and a thermosetting resin, the lignin being soluble in an organic solvent and contained in the composite molded product in an amount of from 3 to 60% by mass.

16. A composite molded product comprising lignin and a thermoplastic resin, the lignin being soluble in an organic solvent and contained in the composite molded product in an amount of from 3 to 90% by mass.

17. A composite molded product comprising lignin and a thermoplastic resin, the lignin being soluble in an organic solvent and contained in the composite molded product in an amount of from 3 to 60% by mass.

18. The composite molded product according to any one of claims 14 to 17, wherein the lignin has a weight-average molecular weight of from 100 to 10000.

19. The composite molded product according to any one of claims 14 to 17, wherein the lignin has a weight-average molecular weight of from 500 to 10000.

20. The composite molded product according to any one of claims 14 to 19, wherein a content of a sulfur atom in the lignin is 2% by mass or less.

21. The composite molded product according to any one of claims 14 to 20, wherein the lignin is obtained by treating a raw material with water only to thereby separate the lignin from a cellulose component and a hemicellulose component, and then dissolving the thus separated lignin in an organic solvent.

22. The composite molded product according to any one of claims 14 to 21, wherein the lignin is obtained by treating a plant raw material by a steam explosion method in which steam is introduced under pressure into the plant raw material and a pressure applied by the steam introduced is instantaneously released for subjecting the plant raw material to steam explosion to thereby separate the lignin from a cellulose component and a hemicellulose component, and then dissolving the thus separated lignin in an organic solvent.

## INTERNATIONAL SEARCH REPORT

| International application No. |
| --- |
| PCT/JP2011/052833 |

A.  CLASSIFICATION OF SUBJECT MATTER
*C08L97/00*(2006.01)i, *C08G59/40*(2006.01)i

According to International Patent Classification (IPC) or to both national classification and IPC

B.  FIELDS SEARCHED

Minimum documentation searched (classification system followed by classification symbols)
C08L97/00-97/02, C08G59/00-59/72

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2009-263549 A  (Hitachi, Ltd.), 12 November 2009 (12.11.2009), claims 1 to 8; paragraphs [0001], [0009], [0017], [0020], [0021], [0023] to [0031], [0041]; examples; table 1 (Family: none) | 1-22 |
| A | JP 2006-66237 A  (Meidensha Corp.), 09 March 2006 (09.03.2006), entire text (Family: none) | 1-22 |
| A | JP 2008-138061 A  (Meidensha Corp.), 19 June 2008 (19.06.2008), entire text & US 2009/0281273 A1    & WO 2008/065866 A1 & DE 112007002864 T | 1-22 |

|☒| Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 03 March, 2011 (03.03.11) | Date of mailing of the international search report 15 March, 2011 (15.03.11) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/052833

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-199209 A  (Kanazawa University Technology Licensing Organization Ltd.), 28 July 2005 (28.07.2005), entire text (Family: none) | 1-22 |
| A | JP 2008-213370 A  (Toyota Auto Body Co., Ltd.), 18 September 2008 (18.09.2008), entire text (Family: none) | 1-22 |
| A | JP 7-148712 A  (Mokushitsu Shinsozai Gijutsu Kenkyu Kumiai), 13 June 1995 (13.06.1995), entire text (Family: none) | 1-22 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007002120 A
- JP 4423947 B
- JP 2009286933 A